# FASCICULE DE BREVET EUROPEEN

(11) **EP 3 371 097 B1**
(45) Date de publication et mention de la délivrance du brevet: **04.12.2019**
(21) Numéro de dépôt: 16778018.8
(22) Date de dépôt: 06.10.2016
(51) Int. Cl.: C01B 3/06, C01B 3/08

(54) **UTILISATION D'UN MATÉRIAU À BASE DE MAGNÉSIUM POUR PRODUIRE DU DIHYDROGÈNE OU DE L'ÉLECTRICITÉ**
VERWENDUNG EINES MATERIALS AUF MAGNESIUMBASIS ZUR ERZEUGUNG VON DIHYDROGEN ODER ELEKTRIZITÄT
USE OF A MAGNESIUM-BASED MATERIAL FOR PRODUCING DIHYDROGEN OR ELECTRICITY

(30) Priorité: 06.10.2015 FR 1559518
(43) Date de publication de la demande: 12.09.2018
(73) Titulaire: Université de Bordeaux, 33000 Bordeaux (FR); Institut Polytechnique de Bordeaux, 33400 Talence (FR); Centre National de la Recherche Scientifique, 75016 Paris (FR)
(72) Inventeur: MAUVY, Fabrice Claude Michel, 33610 Canejan (FR); BOBET, Jean-Louis, 33600 Pessac (FR); SABATIER, Jocelyn, 33140 Villenave D'ornon (FR); BOS, Frédéric, 33500 Libourne (FR)
(74) Mandataire: Lavoix
(86) Numéro de dépôt international: PCT/EP2016/073905
(87) Numéro de publication internationale: WO 2017/060368

(56) Documents cités:
- WO-A2-2009/080986
- CN-B- 101 811 667
- KOJIMA Y ET AL: "Hydrogen generation by hydrolysis reaction of magnesium hydride", JOURNAL OF MATERIALS SCIENCE, KLUWER ACADEMIC PUBLISHERS, BO, vol. 39, no. 6, 1 mars 2004 (2004-03-01), pages 2227-2229, XP019210215, ISSN: 1573-4803, DOI: 10.1023/B:JMSC.0000017794.92899.BD

## Description

La présente invention concerne l'utilisation d'un matériau pour produire de l'hydrogène ou de l'électricité, le matériau étant à base de magnésium.

Dans une application particulière, l'hydrogène est transformé en électricité dans une pile à combustible et l'électricité produite sert à alimenter un moteur électrique, par exemple un moteur d'appoint de bicyclette.

La production d'hydrogène est l'un des principaux défis pour remplacer les combustibles fossiles et aller vers la production d'une énergie « verte » et durable. En effet, le dihydrogène gazeux, que nous appellerons « hydrogène » dans la présente demande, est un très bon carburant de remplacement, car il présente une haute densité de puissance et les produits de sa combustion ou de son utilisation dans une pile à combustible sont non polluants. En particulier, la combustion de l'hydrogène ne génère pas de CO₂ (dioxyde de carbone).

Au cours des dernières décennies, beaucoup d'efforts ont été consacrés à la production d'hydrogène en grande quantité. Dans ce cadre, le reformage catalytique de combustibles fossiles reste une méthode de choix aujourd'hui. Cependant, l'électrolyse et la fermentation des végétaux sont également envisagées comme des possibilités alternatives.

La production d'hydrogène sur la base de la réaction d'hydrolyse de divers matériaux est une autre voie d'investigation. Cette méthode présente l'intérêt qu'aucune énergie supplémentaire n'est nécessaire (fonctionnement à basse température) et la méthode permet de produire de l'hydrogène de façon délocalisée et à une pureté convenable pour de nombreuses applications.

De nombreux types de matériaux ont déjà été envisagés, parmi lesquels les hydrures complexes, les métaux, les hydrures de métaux et les intermétalliques. Parmi ces matériaux, le magnésium a retenu l'attention pour la production d'hydrogène par hydrolyse en raison de son activité électrochimique élevée, de sa faible densité et de son faible coût. De plus, c'est un produit non toxique et abondant. Le magnésium et l'hydrure de magnésium réagissent avec l'eau selon les équations suivantes respectivement :

Mg + 2H₂O = Mg(OH)₂ + H₂ (Eq.1)

MgH₂ + 2H₂O = Mg(OH)₂ + 2H₂ (Eq.2)

Ces réactions ont un rendement théorique de production d'hydrogène, en poids et sans comptabiliser l'eau, de respectivement 8,2 % et 15,2%. Cependant, ces réactions sont toujours plus ou moins bloquées par la formation d'une couche d'hydroxyde Mg(OH)₂, ce qui limite leur intérêt en pratique.

Y. Kojima et al. Journal of Materials Science 39(2004), pages 2227 à 2229 montre cet hydrolyse de magnésium.

Un but de l'invention est donc de fournir un matériau dont l'utilisation permet la production d'hydrogène par hydrolyse, ou d'électricité à partir de cet hydrogène, avec un rendement de transformation amélioré.

A cet effet, l'invention concerne une utilisation selon la revendication 1.

Dans la présente demande, les termes « hydrogène » et « dihydrogène » sont utilisés indifféremment et désignent le dihydrogène à l'état gazeux.

Selon des modes particuliers de réalisation, l'utilisation précitée comprend l'une ou plusieurs des caractéristiques correspondant aux revendications 2 à 7, prise(s) selon toutes les combinaisons techniquement possibles.

L'invention concerne également un procédé selon la revendication 8.

Selon des modes particuliers de réalisation, le procédé comprend l'une ou plusieurs des caractéristiques correspondant aux revendications 9 et 10, prise(s) selon toutes les combinaisons techniquement possibles.

L'invention concerne enfin un dispositif selon la revendication 11.

L'invention sera mieux comprise à la lecture de la description qui va suivre, donnée uniquement à titre d'exemple et faite en se référant aux dessins annexés, sur lesquels :
- la figure 1 est une vue schématique d'un dispositif de production d'électricité selon l'invention,
- les figures 2 et 3 sont des vues schématiques en perspective respectivement de deux modes de réalisation d'un matériau selon l'invention utilisable dans le dispositif représenté sur la figure 1,
- les figures 4 et 5 sont des diagrammes représentant des taux de réaction d'hydrolyse en fonction du temps pour différents réactifs formant des exemples et des contre-exemples de l'invention,
- la figure 6 est un graphique représentant le débit de production d'hydrogène obtenu à partir d'un matériau selon l'invention,
- la figure 7 est un graphique illustrant la production d'hydrogène en fonction du temps par la réaction d'hydrolyse, par exemple dans une solution aqueuse à 35g/L de NaCl, de quatre échantillons,
- la figure 8 est un graphique illustrant la production d'hydrogène en fonction du temps par la réaction d'hydrolyse, par exemple dans une solution aqueuse à 35g/L de NaCl, de Mg-Ni-C à différentes pressions de pastillage, et
- la figure 9 est un graphique illustrant la production d'hydrogène en fonction du temps par la réaction d'hydrolyse, par exemple dans une solution aqueuse à 35g/L de NaCl, d'un échantillon particulier à différentes pressions de pastillage.

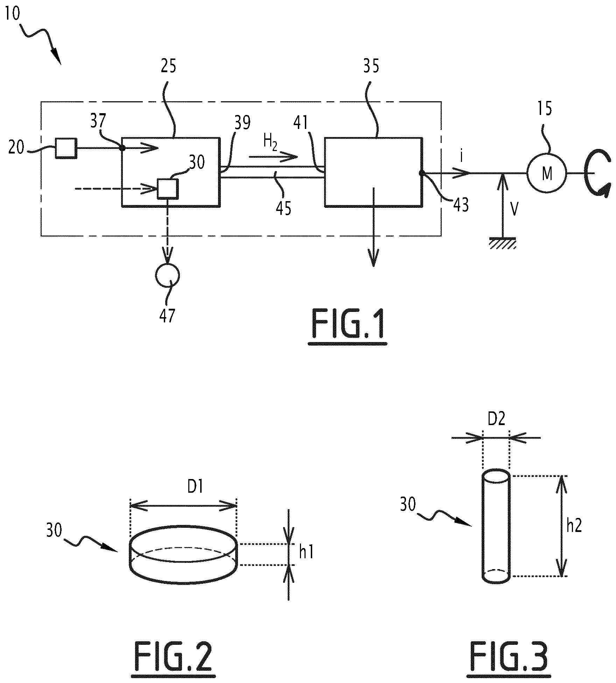

En référence à la figure 1, on décrit un dispositif 10 de production d'électricité selon l'invention.

Le dispositif 10 est par exemple connecté électriquement à un moteur 15 d'une bicyclette (non-représentée).

Le dispositif 10 comprend une source de solution aqueuse 20, un réacteur d'hydrolyse 25 adapté pour mettre en contact un matériau 30 avec la solution aqueuse pour produire de l'hydrogène gazeux, et une pile à combustible 35 configurée pour produire un courant i à partir de l'hydrogène produit par le réacteur d'hydrolyse.

Dans la présente demande, les termes « hydrogène » et « dihydrogène » sont utilisés indifféremment et désignent H2 gazeux

En variante (non représentée), le dispositif 10 comprend un moteur à combustion (non représenté) adapté pour brûler l'hydrogène, à la place ou en complément de la pile à combustible 35.

Selon une autre variante (non représentée), le dispositif 10 comprend un brûleur et un thermoélément pour produire de l'électricité par effet Seebeck.

La source de solution aqueuse 20 est par exemple un réservoir adapté pour contenir de l'eau salée, comportant de préférence entre 2% et 5% en masse de chlorure de sodium, par exemple environ 3,5 %.

Le réacteur d'hydrolyse 25 est adapté pour recevoir le matériau 30 et permettre son renouvellement après usage, avantageusement sous forme d'une recharge de matériau.

Le réacteur d'hydrolyse 25 comporte une entrée 37 reliée fluidiquement à la source de solution aqueuse 20, et une sortie 39 pour l'hydrogène gazeux produit.

Le réacteur d'hydrolyse 25 est par exemple réalisé intégralement en matière plastique. En variante, réacteur d'hydrolyse 25 est par exemple réalisé en métal revêtu d'un polymère.

La pile à combustible 35 est par exemple du type PEMFC (en anglais *polymer electrolyte membrane fuel cell*), c'est-à-dire qu'elle comporte une membrane électrolyte polymère.

La pile à combustible 35 comprend au moins une entrée 41 reliée fluidiquement à la sortie 39 du réacteur d'hydrolyse 25, et une sortie 43 pour le courant électrique i.

Avantageusement, l'entrée 41 est reliée à la sortie 39 par une canalisation 45.

Le volume total d'hydrogène disponible ou potentiellement présent dans le dispositif 10 est tel que la pression du gaz dans le dispositif reste inférieure à 10 bars absolus.

En variante, la canalisation 45 est remplacée par un système de connexion (non représenté) possédant cette propriété.

Le matériau 30 possède avantageusement une forme de pastille ou de barreau tels que représentés respectivement sur les figures 2 et 3 et présentant respectivement des diamètres D1, D2 et des hauteurs h1, h2.

Par exemple, D1 est compris entre 6 mm et 10 mm, de préférence égale à 8 mm, et h1 est comprise entre 8 mm et 15 mm, de préférence égale à 10 mm.

Par exemple, D2 est compris entre 8 mm et 14 mm et h2 est comprise entre 15 mm et 150 mm.

Selon un mode particulier de réalisation, dans le cas où le matériau 30 possède une forme de pastille, le réacteur d'hydrolyse 25 est avantageusement adapté pour recevoir plusieurs pastilles, par exemple empilées les unes sur les autres. Il est alors avantageusement possible d'ajuster la capacité du réacteur d'hydrolyse 25 mise en jeu (utilisation « pas à pas »).

Le matériau 30 est avantageusement poreux avec une porosité comprise par exemple entre 30 % et 35 % en volume. La porosité est avantageusement calculée ou mesurée, par exemple à l'aide d'un microscope électronique à balayage.

Le matériau 30 est par exemple réalisé, comme on le verra dans les exemples ci-après, en compactant une poudre (non représentée), par exemple uni-axialement.

La poudre est constituée d'un réactif comprenant un premier composé, par exemple du magnésium métallique, allié à un deuxième composé carboné, tel que du graphite ou des fibres de carbone.

En variante, le premier composé est de l'hydrure de magnésium MgH₂ ou un mélange de magnésium métallique et d'hydrure de magnésium.

Notamment lorsque le premier composé comporte de l'hydrure de magnésium, la solution aqueuse destiné à hydrolyser le réactif est avantageusement acide, par exemple de pH inférieur ou égal à 7, en particulier inférieur ou égal à 5.

Le premier composé représente au moins 75% en masse du réactif, et le deuxième composé entre 1% et 25%, de préférence entre 3% et 15% en masse du réactif. Par exemple, aux impuretés près, le réactif est constitué en masse de 90 % de magnésium métallique allié à du graphite.

Selon une variante, le réactif est tel que le premier composé est en outre allié à un ou plusieurs métaux de transition, par exemple le nickel, représentant au total entre 2% et 15% en masse du réactif, le deuxième composé représentant alors également entre 2% et 15% en masse du réactif.

De préférence, le ou les métaux de transition allié(s) au premier composé représentent entre 3% et 7% en masse du réactif, le deuxième composé représentant de préférence également entre 3% et 7% en masse du réactif. Par exemple, le réactif est constitué en masse de 90% de magnésium métallique, 5 % de graphite, et 5 % de nickel.

Selon un mode particulier de réalisation, le matériau 30, outre le réactif en poudre, comprend un liant.

Selon un autre mode particulier, la poudre constituant le réactif est agglomérée à un support dans le matériau 30.

Selon un autre mode de réalisation (non représenté), le matériau est inclus dans une capsule intégrant la source de solution aqueuse 20.

Par exemple, la capsule comprend une partie inférieure dans laquelle se trouve le matériau 30, et une partie supérieure formant un réservoir comportant la solution aqueuse.

La partie supérieure et la partie inférieure sont avantageusement associées par un axe de rotation et pivotent l'une par rapport à l'autre autour de l'axe de rotation. Les parties inférieure et supérieure comportent des lumières de forme circulaire. Les parties inférieure et supérieure sont séparées par un joint d'étanchéité. Les parties inférieure et supérieure sont mobiles en rotation entre une position fermée, dans laquelle les lumières ne sont pas en vis-à-vis, et une position ouverte, dans laquelle les lumières sont en vis-à-vis.

En plaçant la capsule dans un réceptacle du réacteur d'hydrolyse, la partie supérieure de la capsule pivote, ce qui met en vis-à-vis les lumières de la partie supérieure et de la partie inférieure. En fermant un capot (non représenté) du réceptacle pour étanchéifier le système, la partie supérieure de la capsule est perforée. La solution aqueuse coule sur le matériau 30 et la réaction d'hydrolyse commence.

L'hydrogène s'échappe via un orifice de la partie supérieure.

Selon un autre mode de réalisation (non représenté), le réacteur d'hydrolyse 25 comporte un réservoir, par exemple en forme de tube, qui contient la solution aqueuse de NaCl, et une pompe adaptée pour qu'une quantité contrôlée de solution aqueuse soit mise en contact avec le matériau 30.

Le tube est par exemple emmanché à une extrémité longitudinale dans un support de tube. Un porte capsule est avantageusement emmanché sur l'autre extrémité longitudinale du tube.

La pompe est par exemple située dans le tube afin de remonter la solution aqueuse via des orifices, par exemple deux, du porte capsule. Le système est par exemple réalimenté en solution aqueuse via un conduit central dans la capsule. Un capteur de niveau permet d'avertir un utilisateur d'un besoin de remplissage.

Une capsule contient le matériau 30 est par exemple obturée par un opercule situé en partie supérieure.

Le porte capsule est adapté pour recevoir la capsule. Un capot articulé se referme sur le porte capsule et perfore l'opercule de la capsule grâce à des buses fixées sur le capot et faisant saillie vers l'intérieur du porte capsule. Les buses sont adaptées à arroser le matériau 30. Les buses sont connectées à un système de canalisations dans le capot qui viennent se connecter dans les deux orifices du porte capsule lors de la fermeture du capot.

Un joint torique assure l'étanchéité entre le capot et le porte capsule. L'hydrogène produit par hydrolyse est récupéré dans une partie supérieure du capot (qui est donc percée) par un raccord de piquage. En aval du raccord de piquage, un réservoir d'hydrure absorbe avantageusement les surpressions dans l'hydrogène produit.

Dans ce mode de réalisation comme dans les autres, un détendeur (non représenté) et/ou un clapet anti-retour sont éventuellement présents dans la canalisation 45.

Selon un autre mode de réalisation (non représenté), le matériau 30, sous forme de pastilles, est placé dans un barillet. Le barillet est introduit dans un fourreau du réacteur d'hydrolyse 25, le fourreau présentant une forme adaptée pour bloquer le barillet en rotation par rapport au réacteur d'hydrolyse.

Le fourreau est fermé par un capot après introduction d'un réservoir de la solution aqueuse. Le réservoir est posé sur une bague rotative entraînée en rotation par rapport au barillet, par exemple par un moteur pas à pas.

La bague rotative est située au sommet du réservoir. Lors de la rotation de la bague, une pastille de matériau 30 tombe dans la bague rotative est entraînée jusqu'à ce qu'une lumière dans la bague se retrouve en vis-à-vis d'une lumière au sommet du réservoir. La pastille tombe alors dans le réservoir, ce qui amorce alors la réaction d'hydrolyse.

Dans ce mode de réalisation, la réaction d'hydrolyse est contrôlée en faisant tomber les pastilles sélectivement dans le réservoir.

Un procédé de production d'électricité selon l'invention, illustrant le fonctionnement du dispositif 10, va maintenant être décrit.

Le procédé comprend une étape d'obtention du matériau 30, une étape de mise en contact du matériau avec la solution aqueuse et d'hydrolyse de la solution aqueuse par le réactif du matériau pour obtenir l'hydrogène gazeux, une étape de récupération de l'hydrogène obtenu, et une étape de production d'électricité dans la pile à combustible 35 à partir de l'hydrogène récupéré.

Le matériau 30 obtenu est par exemple du premier type mentionné ci-dessus, c'est-à-dire qu'il est constitué d'une poudre compactée, elle-même constituée de magnésium métallique allié à du graphite.

Le matériau 30 est placé à l'intérieur du réacteur d'hydrolyse 25.

La solution aqueuse de la source de solution aqueuse 20 entre dans le réacteur d'hydrolyse 25 par l'entrée 37 et est mise en contact avec le matériau 30.

Le réactif du matériau 30 est hydrolysé par la solution aqueuse, ce qui provoque un dégagement d'hydrogène gazeux. Cet hydrogène est récupéré et conduit jusqu'à la sortie 39 du réacteur d'hydrolyse. Le matériau 30 se charge en hydroxyde à mesure que la réaction d'hydrolyse avance.

Comme on le verra dans les exemples suivants, la réaction d'hydrolyse se produit avec une bonne cinétique de réaction grâce à la composition du matériau 30, et dans une moindre mesure grâce à sa structure.

Lorsque tout le magnésium métallique accessible a été hydroxydé, le matériau 30 usagé est retiré du réacteur d'hydrolyse 25 sous la forme d'un déchet 47 et remplacé par une nouvelle recharge de matériau.

L'hydrogène gazeux produit est récupéré au niveau de la sortie 39 et acheminé par la canalisation 45 jusqu'à l'entrée 41 de la pile à combustible 35.

Dans la pile à combustible 35, l'hydrogène gazeux et l'oxygène de l'air ambiant sont transformés en eau et le courant i servant à alimenter le moteur 15 est produit.

Lorsque le matériau 30 est du deuxième type décrit ci-dessus en tant que variante, c'est-à-dire est constitué d'une poudre compactée de magnésium métallique allié à du graphite et à du nickel, le fonctionnement est analogue. Toutefois, un effet synergétique est observé, en ce sens que le réactif Mg-C-Ni apparaît meilleur à la fois que le réactif Mg-C et le réactif Mg-Ni pris séparément.

### Exemples

Des échantillons de 50 mg de matériau 30 en poudre ont été préparés en laboratoire à partir de magnésium de la société STREAM CHEMICALS pur à 99,9% en masse.

Différents échantillons ont été préparés : un échantillon de Mg métallique pur, des échantillons comportant 90% en masse de magnésium métallique et 10% en masse d'un composé X, X étant du graphite, des fibres de carbone, du nickel, du fer, ou de l'aluminium, aux impuretés près, et un échantillon comportant du magnésium métallique à 50% en masse, 5% de graphite et 5% de nickel en masse. Des échantillons à base d'hydrure de magnésium ont également été préparés.

Les échantillons ont été moulus dans un moulin à billes, par exemple le modèle « Fritsch P5 » dans une ampoule en acier inoxydable sous une atmosphère d'hydrogène à une pression de dix bars, pendant 5 heures. La mouture a comporté des périodes de 15 minutes de mouture continue, suivi par 2 minutes d'arrêt pour permettre à l'ampoule de refroidir. L'ampoule était rechargée en hydrogène toutes les 30 minutes afin d'assurer une pression constante d'hydrogène. Le ratio de poids entre les billes et la poudre était de 17 pour 1, ce qui correspond à 8g de poudre et 34 billes d'acier inoxydable de 10 mm de diamètre. La vitesse de rotation a été fixée à 250 tours par minute.

La réaction d'hydrolyse a été effectuée à l'aide d'une solution de chlorure de sodium comportant 3,5 % en masse de ce sel.

Les échantillons ont été caractérisés par diffraction X en utilisant un diffractomètre Philips PANalytical X'Pert (PW1820).

Les quantités relatives et/ou les puretés des phases en présence telles que les hydrures et les phases métalliques ont été estimées par diffraction X en utilisant le logiciel EVA.

Des observations ont été réalisées en utilisant un microscope électronique à balayage TESCAN VEGA3 SB. La spectroscopie Auger a été utilisée pour étudier la formation d'hydroxyde de magnésium et de chlorure de magnésium sur la surface du réactif.

Les tailles de particule ont été mesurées par granulométrie laser à l'aide d'un appareil Mastersizer 2000S.

La pile à combustible utilisée est une pile à combustible classique du type PEMFC.

Les diffractogrammes ont montré que les échantillons moulus de Mg-Al et Mg-graphite étaient dépourvus de pics correspondants à MgH₂, ce qui signifie qu'aucune conversion de Mg en hydrure ne s'est produite pendant la préparation des échantillons. En revanche, les échantillons Mg-Fe et Mg-Ni présentaient respectivement en masse 24% et 4% de MgH₂.

En cas de présence de MgH2 dans les échantillons de matériau 30, un acide est ajouté dans la solution aqueuse servant à l'hydrolyse. L'acide est par exemple l'acide chlorhydrique.

Les dimensions des particules obtenues (diamètre moyen) sont précisées dans le tableau 1 ci-après.

**Tableau 1**

| Composé | % massique de MgH₂ | Dimension des particules (µm)^{a} | Hydrogène généré | |
|---|---|---|---|---|
| | | | Rendement (%) | Volume (mL) |
| Mg/10%Fe | 24 % | 5 - 30 | 81 | 19.5 |
| Mg/10%Ni | 4 % | 30-40 | 97 | 20 |
| Mg/10%Gr | - ^{b} | 110 | 100 | 20 |
| Mg et Mg/Al | - ^{b} | 100 | 45 | 9 |
| ^{a} Diamètre médian | | | ^{b} Non détectable | |

Ensuite, les échantillons ont été mis en présence de 100 cm³ d'une solution de chlorure de sodium à 3,5 % en masse et la cinétique de la réaction a été mesurée.

Par ailleurs, des essais (mesures de débit, de pression, de volume dégagé) ont également été réalisés à diverses températures allant de 0°C à 40°C et un dégagement important d'hydrogène a été obtenu.

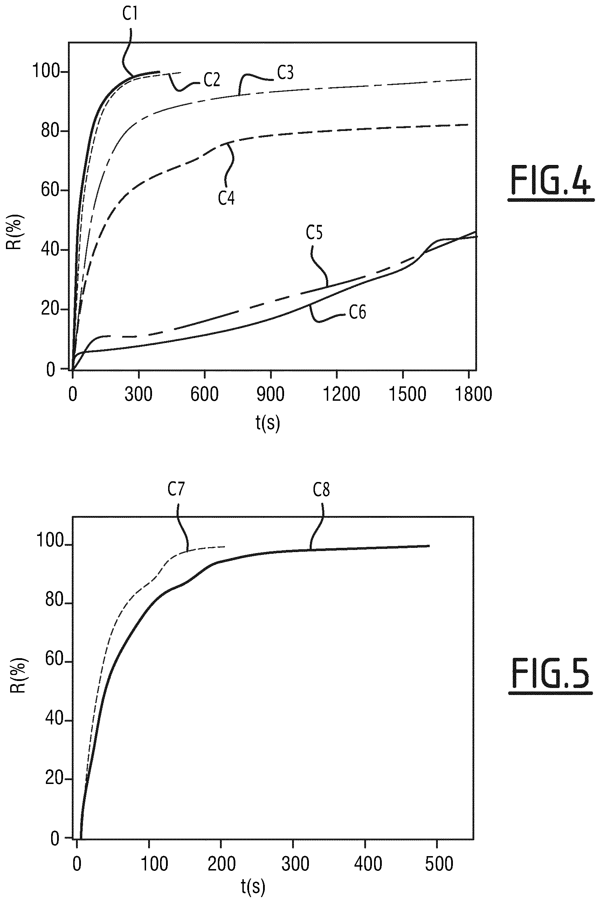

Les résultats sont visibles sur les figures 4 et 5 qui montrent les taux de réaction obtenus en fonction du temps pour les différents échantillons.

Les mêmes rendements ont été obtenus avec d'autres pastilles, de porosité 30%, ayant les compositions correspondant aux trois premières lignes du tableau 1 (Fe, Ni et graphite)

Le taux de réaction est exprimé en pourcentage, 100% signifiant que la réaction est totale.

Sur la figure 4, la courbe C1 correspond à un échantillon Mg-graphite, la courbe C2 à Mg-fibres de carbone, la courbe C3 à Mg-Ni, la courbe C4 à Mg-Fe, la courbe C5 à Mg-Al et la courbe C6 à Mg pur.

Il apparaît que les échantillons dans lesquels le magnésium métallique est associé à 10% d'un composé carboné présentent les meilleures cinétiques de réactions.

Sur la figure 5, on compare la cinétique de réaction d'hydrolyse par un échantillon de Mg-graphite-nickel à 5% en masse de graphite et 5% en masse de nickel (courbe C7) et par un échantillon de Mg-graphite à 10% en masse de graphite (courbe C8). Il apparaît que le graphite et le nickel agissent en synergie pour améliorer la cinétique de réaction par rapport aux échantillons Mg-graphite ou Mg-nickel.

La comparaison de l'état de surface des échantillons Mg-graphite-Ni et Mg-graphite au microscope électronique à balayage suggère que la présence de 10% en masse de graphite serait suffisante pour atteindre un optimum de vitesse de la réaction. Sans être liés par une quelconque théorie, les inventeurs pensent que le graphite joue un rôle d'anti-abrasif ou de lubrifiant qui facilite un «décollement» de fragments de magnésium dans le matériau 30, c'est-à-dire une effervescence.

De l'hydrogène a été produit à l'aide d'échantillons comportant de l'hydrure de magnésium et a été envoyé dans la pile à combustible. Il a ainsi été possible de produire un courant de 0,15 A à une tension de 0,52 V pendant 35 minutes pour une seule pastille. L'utilisation de plusieurs pastilles, par exemple empilées, comme décrit plus haut, permet d'obtenir, par addition, une intensité ou une tension plus importantes.

Un tel courant peut permettre notamment d'alimenter un moteur électrique adapté pour fournir un travail d'appoint à une bicyclette.

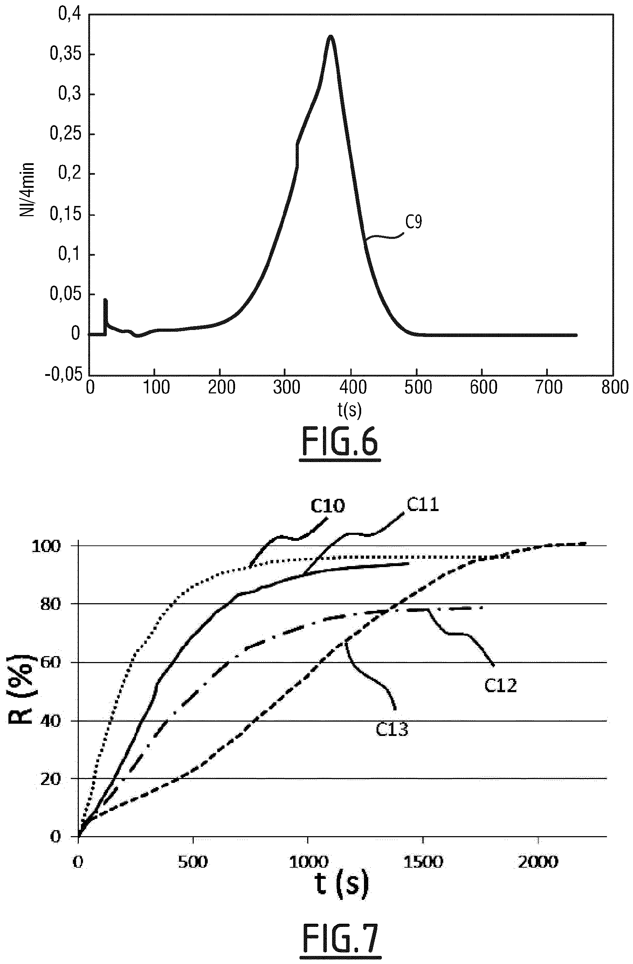

Selon un autre exemple, une pastille de 1,02 g de matériau 30 a été préparée. La pastille a été réalisée en compactant une poudre comportant le magnésium métallique et 10% de graphite en masse. La pastille a été ensuite immergée dans une solution aqueuse comportant 3,5% en masse de NaCl. L'hydrogène produit a été collecté. Le débit d'hydrogène, en Nl/min, est représenté en fonction du temps, en secondes, par la courbe C9 sur la figure 6. Un échauffement de la solution a été observé, mais il est limité seulement à environ 15°C.

Dans cet exemple, « NI » signifie un litre pris dans les conditions normales de température et de pression (0°C et 101325 Pa).

Comme on peut le constater sur la courbe C9, l'expérience a permis de produire un débit d'hydrogène qui s'est élevé à plus de 0.35 Nl/min. La quantité totale d'hydrogène produit a été d'environ 0,7 Nl, ce qui est conforme à la valeur théorique attendue, compte-tenu de fuites dans le dispositif expérimental et de la précision du débitmètre utilisé.

Grâce aux caractéristiques décrites ci-dessus, le matériau 30 est adapté à la production d'hydrogène par hydrolyse, ou d'électricité à partir de cet hydrogène, avec un bon rendement de transformation.

Le matériau selon l'invention permet à la fois d'améliorer le rendement et la cinétique de transformation. En outre, le matériau 30 présente une tenue au vieillissement améliorée (stockage calendaire), car les réactifs de la réaction d'hydrolyse peuvent être stockés indépendamment, de façon prolongée, sans altération.

Selon un mode de réalisation de l'invention, le dispositif 10 de production d'électricité comprend des moyens pour réguler la pression au sein du réacteur en contrôlant la quantité de solution aqueuse mise en contact avec le matériau 30. Pour cela, le dispositif 10 comprend une électrovanne commandée en mode PWM disposée à l'entrée 37 du réacteur, et un capteur de pression disposé au niveau du réacteur. Le capteur de pression mesure la pression et cette information est comparée à une consigne de pression donnée. Selon le résultat de cette comparaison, une commande est créée et appliquée à l'électrovanne afin d'augmenter ou diminuer le débit de l'arrivée de la solution aqueuse pour réguler la pression dans le réacteur. Cette régulation de la pression dans le réacteur a pour avantage d'optimiser le chargement de la pile.

Selon un autre mode de réalisation, le dispositif 10 de production d'électricité comprend une boucle d'asservissement reliée à la boucle de régulation. Pour cela, le dispositif 10 comprend un moyen de mesure du courant disposé au niveau de la pile à combustible 35. La mesure du courant généré par la pile pourra servir à anticiper la consommation d'hydrogène, sans attendre que la boucle de régulation détecte la chute de pression dans le réacteur d'hydrolyse 25.

Selon un mode de réalisation, le réactif est tel que le premier composé est allié ou mélangé à un ou plusieurs métaux. A titre d'exemple, les métaux d'alliages et/ou d'associations peuvent être les suivants : aluminium, zinc, fer, nickel, zirconium, titane, cobalt, cuivre et manganèse.

Cinq échantillons de matériau 30 ont été préparés à cet effet : Mg-Ni-C, Mg-Al-Zn, Mg-AI-Zn+5%C, AZ91, AZ91+5%C. Leur composition en pourcentage massique est précisée dans le tableau 2 ci-dessous. AZ91C correspond à l'alliage AZ91 auquel 5% de C a été ajouté.

**Tableau 2**

| Matériau | Mg | Al | Zn | C | Ni | Rendement en hydrogène |
|---|---|---|---|---|---|---|
| AZ91 | 90% | 9% | 1% | - | - | 93% |
| AZ91C | 90% | 9% | 1% | 5% | - | 96% |
| Mg Ni C | 90% | - | - | 5% | 5% | 98% |
| Mg Al Zn | 90% | 9% | 1% | - | - | 100% |
| Mg Al Zn C | 85% | 9% | 1% | 5% | - | 79% |

Les échantillons AZ91 et AZ91C sont des alliages. L'alliage AZ91 correspond à un alliage de magnésium couramment utilisé dans l'aéronautique et qui peut ainsi être recyclé et valorisé dans le cadre de la production d'hydrogène. AZ91C comprend en outre 5% de carbone afin d'améliorer l'efficacité du broyage à bille, car le carbone est un agent lubrifiant, minimise le phénomène de soudure entre les grains et conduit donc à une poudre avec une grande surface spécifique et donc un meilleur contact entre le magnésium et l'eau.

Les échantillons Mg-Ni-C, Mg-Al-Zn, Mg-AI-Zn-C sont par exemple des mélanges de poudres métalliques, avantageusement élémentaires.

Selon la présente invention, deux composés forment un « alliage » lorsqu'il existe des liaisons chimiques entre eux, contrairement à un mélange, dans lequel il n'y pas d'interaction chimique entre les différents composés.

Ensuite, ces échantillons ont été mis en contact avec une solution aqueuse contenant 3,5% en masse de chlorure de sodium et la cinétique de la réaction a été mesurée.

La figure 7 montre le taux de réaction obtenu en fonction du temps pour quatre échantillons. Sur la figure 7, la courbe C10 correspond à l'échantillon AZ91C, la courbe C11 à AZ91, la courbe C12 à Mg-Al-Zn et la courbe C13 à Mg-AI-Zn-C.

Il apparaît, tout d'abord, que la cinétique et le rendement de la réaction d'hydrolyse sont différents entre la poudre issue du broyage de l'alliage AZ91 et les mélanges de poudres métalliques.

Sur la figure 7, si on compare la cinétique de réaction d'hydrolyse pour un échantillon de mélange de Mg-Al-Zn (courbe C12) et un échantillon d'alliage de AZ91 (courbe C11), il apparaît que l'alliage AZ91 présente de meilleures performances. Sans être liés par une quelconque théorie, les inventeurs supposent que le composé défini (AI12Mg17), présent dans l'alliage AZ91, a un effet lié notamment à la réduction de l'aluminium lors de l'hydrolyse et donc une cinétique d'hydrolyse plus rapide. De même la présence d'une solution solide de formulation MgZn joue probablement un rôle dans la cinétique.

Par ailleurs, si on compare la cinétique de réaction d'hydrolyse pour un échantillon sans carbone (courbes C11, C12) et pour un échantillon avec carbone (courbes C10, C13), les résultats montrent que la présence de carbone permet d'augmenter la cinétique de la réaction. En effet, la présence du carbone permet d'éviter, lors du broyage, la génération de MgH₂ qui a tendance à ralentir la réaction. L'effet antiadhésif du carbone permet de protéger les particules de Mg.

Afin d'étudier l'effet de la compacité sur la cinétique d'hydrolyse, des échantillons de pastilles de 0,2 g et de diamètre 6 mm ont été préparés à partir des poudres ayant donné les meilleurs résultats en termes de cinétique d'hydrolyse : le mélange Mg-Ni-C et l'alliage AZ91-C. Trois pressions de pastillage différentes : 700, 400 et 100 MPa pour la même durée d'application, fixée à 5 minutes, ont été testées.

La densité et la compacité mesurée des échantillons sont précisées dans le tableau 3 ci-dessous.

**Tableau 3 : Taille, densité et compacité des pastilles de 6 mm de diamètre pour la poudre Mg-Ni-C et la poudre AZ91-C.**

| | | Diamètre (mm) | hauteur (mm) | densité | Compacité (%) |
|---|---|---|---|---|---|
| Mg-Ni-C | 700 MPa | 6 | 4 | 1,72 | 94,5 |
| | 400 MPa | 6 | 4 | 1,7 | 93 |
| | 100 Mpa | 6 | 4,6 | 1,52 | 83,5 |
| AZ91-C | 700 MPa | 6 | 4 | 1,71 | 89,5 |
| | 400 MPa | 6 | 4,6 | 1,58 | 83 |
| | 100 MPa | 6 | 5,5 | 1,3 | 68 |

Ces échantillons ont ensuite été mis en contact avec une solution aqueuse de chlorure de sodium à 3,5 % en masse, et leur cinétique de réaction a été mesurée.

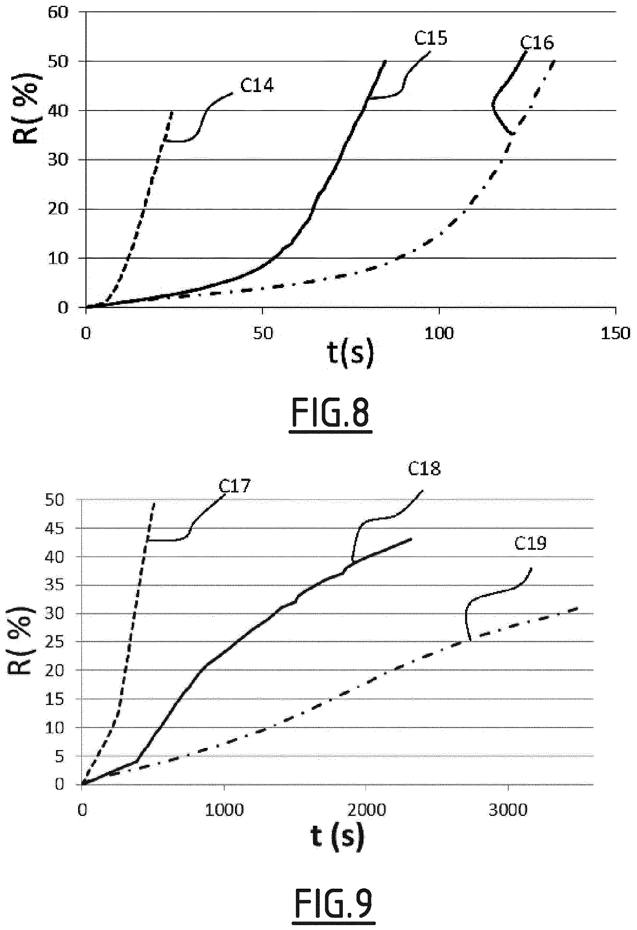

Les figures 8 et 9 illustrent le taux de réaction obtenu en fonction du temps pour les six échantillons du tableau 3.

Sur la figure 8, la cinétique de l'échantillon Mg-N-C est comparée pour les trois pressions de pastillage. La courbe C14 correspond à un échantillon de Mg-N-C ayant été soumis à une pression de 100 MPa, la courbe C15 à une pression de 400 MPa et la courbe C16 à une pression de 700 MPa.

Sur la figure 9, la cinétique de l'échantillon AZ91-C est comparée pour les trois pressions de pastillage. La courbe C17 correspond à un échantillon de AZ91-C ayant été soumis à une pression de 100 MPa, la courbe C18 à une pression de 400 MPa et la courbe C19 à une pression de 700 MPa.

On peut constater que les échantillons dont la pression de pastillage est à 100 MPa sont les plus rapides. Le temps de réaction pour atteindre 50 mL d'hydrogène est de l'ordre de 5 minutes. Il convient de minimiser la pression de pastillage pour réduire la compacité.

## Revendications

1. Utilisation d'un matériau (30) pour produire de l'hydrogène ou de l'électricité, le matériau (30) comprenant, à au moins 50% en masse, un réactif destiné à s'hydrolyser au contact d'une solution aqueuse pour obtenir de l'hydrogène, le réactif comprenant :
- un premier composé choisi parmi le magnésium métallique, l'hydrure de magnésium, et leurs mélanges, et
- un deuxième composé allié au premier composé, le deuxième composé étant choisi parmi le graphite, les fibres de carbone, et leurs mélanges,
le premier composé représentant au moins 75% en masse du réactif, et le deuxième composé représentant entre 1% et 25%, de préférence entre 3% et 10%, en masse du réactif.

2. Utilisation selon la revendication 1, dans laquelle le premier composé est en outre allié ou mélangé à un ou plusieurs métaux représentant au total entre 2% et 10% en masse du réactif, le composé carboné représentant entre 2% et 10% en masse du réactif.

3. Utilisation selon la revendication 2, dans laquelle le premier composé est allié à du nickel représentant entre 2% et 10% en masse du réactif, de préférence entre 3% et 7% en masse du réactif, le composé carboné représentant de préférence entre 3% et 7% en masse du réactif.

4. Utilisation selon l'une quelconque des revendications 1 à 3, dans laquelle le réactif comprend moins de 5% en masse, de préférence moins de 1% en masse, d'éléments autres que le magnésium métallique, l'hydrure de magnésium, le graphite, les fibres de carbone, et les métaux de transition.

5. Utilisation selon l'une quelconque des revendications 1 à 4, le matériau présente une forme de pastille ou de barreau et est destinée à être placé dans un réacteur d'hydrolyse (25).

6. Utilisation selon l'une quelconque des revendications 1 à 5, dans laquelle le réactif comprend une poudre compactée de porosité comprise entre 20% et 40%.

7. Utilisation selon l'une quelconque des revendications 1 à 6, mettant en œuvre une capsule comportant le matériau (30), et optionnellement un réservoir d'une solution aqueuse, comprenant de préférence du chlorure de sodium à au moins 1% en masse.

8. Procédé de production d'hydrogène ou d'électricité comprenant les étapes suivantes :
- obtention d'un matériau (30) comprenant, à au moins 50% en masse, un réactif destiné à s'hydrolyser au contact d'une solution aqueuse pour obtenir de l'hydrogène, le réactif comprenant : un premier composé choisi parmi le magnésium métallique, l'hydrure de magnésium, et leurs mélanges ; et un deuxième composé allié au premier composé, le deuxième composé étant choisi parmi le graphite, les fibres de carbone, et leurs mélanges ; le premier composé représentant au moins 75% en masse du réactif, et le deuxième composé représentant entre 1 % et 25%, de préférence entre 3% et 10% en masse du réactif,
- mise en contact du matériau (30) avec une solution aqueuse, et hydrolyse au moins partielle du réactif du matériau (30) par la solution aqueuse pour obtenir de l'hydrogène gazeux,
- récupération d'au moins une partie de l'hydrogène obtenu, et
- optionnellement, production d'électricité à partir de l'hydrogène récupéré.

9. Procédé selon la revendication 8, dans lequel la solution aqueuse comprend entre 2% et 10%, de préférence entre 2 et 5%, en particulier 3.5% en masse de chlorure de sodium.

10. Procédé selon la revendication 8 ou 9, dans lequel le réactif comprend de l'hydrure de magnésium et la solution aqueuse a un pH inférieur à 7, de préférence inférieur ou égal à 5.

11. Dispositif (10) de production d'hydrogène ou d'électricité comprenant :
- au moins un réacteur d'hydrolyse (25) apte et destiné à mettre en contact un matériau (30) avec une solution aqueuse, le matériau (30) comprenant, à au moins 50% en masse, un réactif destiné à s'hydrolyser au contact d'une solution aqueuse pour obtenir de l'hydrogène, le réactif comprenant : un premier composé choisi parmi le magnésium métallique, l'hydrure de magnésium, et leurs mélanges ; et un deuxième composé allié au premier composé, le deuxième composé étant choisi parmi le graphite, les fibres de carbone, et leurs mélanges ; le premier composé représentant au moins 75% en masse du réactif, et le deuxième composé représentant entre 1% et 25%, de préférence entre 3% et 10%, en masse du réactif, le réacteur d'hydrolyse (25) étant apte et destiné à hydrolyser au moins partiellement le réactif à l'aide de la solution aqueuse pour obtenir de l'hydrogène gazeux, le réacteur d'hydrolyse (25) comportant au moins une sortie (39) pour l'hydrogène gazeux, et
- optionnellement, au moins une pile à combustible (35), ou au moins un moteur à combustion et un alternateur, la pile à combustible (35) ou le moteur à combustion comportant au moins une entrée (41) reliée fluidiquement à la sortie (39) du réacteur d'hydrolyse (25), la pile à combustible (35), ou le moteur à combustion et l'alternateur étant configurés pour produire de l'électricité à partir de l'hydrogène provenant du réacteur d'hydrolyse (25).

## Patentansprüche

1. Verwendung eines Materials (30) zur Produktion von Wasserstoff oder Elektrizität, wobei das Material (30), mit mindestens 50 Masse%, ein Reagenz aufweist, das dazu bestimmt ist, sich bei Kontakt mit einer wässrigen Lösung zu hydrolysieren, um Wasserstoff zu erhalten, wobei das Reagenz aufweist:
- eine erste Zusammensetzung, die ausgewählt ist aus metallischem Magnesium, Magnesiumhydrid und deren Mischungen, und
- eine zweite Zusammensetzung, die mit der ersten Zusammensetzung legiert ist, wobei die zweite Zusammensetzung ausgewählt ist aus Graphit, Kohlefasern und deren Mischungen,
wobei die erste Zusammensetzung mindestens 75% der Masse des Reagenzes ausmacht und die zweite Zusammensetzung zwischen 1% und 25%, vorzugsweise zwischen 3% und 10%, der Masse des Reagenzes ausmacht.

2. Verwendung gemäß Anspruch 1, wobei die erste Zusammensetzung weiterhin legiert oder vermischt ist mit einem oder mehreren Metallen, welche im Ganzen zwischen 2% und 10% der Masse des Reagenzes ausmachen, wobei die Kohlenstoffzusammensetzung zwischen 2% und 10% der Masse des Reagenzes ausmacht.

3. Verwendung gemäß Anspruch 2, wobei die erste Zusammensetzung legiert ist mit Nickel, welches zwischen 2% und 10% der Masse des Reagenzes, vorzugsweise zwischen 3% und 7% der Masse des Reagenzes ausmacht, wobei die Kohlenstoffzusammensetzung vorzugsweise 3% bis 7% der Masse des Reagenzes ausmacht.

4. Verwendung gemäß irgendeinem der Ansprüche 1 bis 3, wobei das Reagenz weniger als 5 Masse%, vorzugsweise weniger als 1 Masse%, an Elementen außer metallischem Magnesium, Magnesiumhydrid, Graphit, Kohlefasern und Übergangsmetallen aufweist.

5. Verwendung gemäß irgendeinem der Ansprüche 1 bis 4, wobei das Material eine Pillen- oder Stabform hat und dazu bestimmt ist, in einem Hydrolyse-Reaktor (25) platziert zu werden.

6. Verwendung gemäß irgendeinem der Ansprüche 1 bis 5, wobei das Reagenz ein verdichtetes Pulver aufweist, welches eine Porosität zwischen 20% und 40% hat.

7. Verwendung gemäß irgendeinem der Ansprüche 1 bis 6, wobei eine Kapsel realisiert wird, welche aufweist das Material (30) und optional ein Reservoir einer wässrigen Lösung, welche vorzugsweise Natriumchlorid mit mindestens 1 Masse% aufweist.

8. Verfahren der Wasserstoff- oder Elektrizitäts-Produktion, welches die folgenden Schritte aufweist:
- Erlangung eines Materials (30), welches, mit mindestens 50 Masse%, ein Reagenz aufweist, welches dazu bestimmt ist, sich bei Kontakt mit einer wässrigen Lösung zu hydrolysieren, um Wasserstoff zu erhalten, wobei das Reagenz aufweist: eine erste Zusammensetzung, die ausgewählt ist aus metallischem Magnesium, Magnesiumhydrid und deren Mischungen, und eine zweite Zusammensetzung, die legiert ist mit der ersten Zusammensetzung, wobei die zweite Zusammensetzung ausgewählt ist aus Graphit, Kohlefasern und deren Mischungen, wobei die erste Zusammensetzung mindestens 75% der Masse des Reagenzes ausmacht und wobei die zweite Zusammensetzung zwischen 1% und 25%, vorzugsweise zwischen 3% und 10%, der Masse des Reagenzes ausmacht,
- In-Kontakt-Bringen des Materials (30) mit einer wässrigen Lösung und wenigstens partielle Hydrolyse des Reagenzes des Materials (30) durch die wässrige Lösung, um gasförmigen Wasserstoff zu erhalten,
- Rückgewinnung von wenigstens einem Teil des erhaltenen Wasserstoffs, und
- optional, Produktion von Elektrizität ausgehend vom rückgewonnenen Wasserstoff.

9. Verfahren gemäß Anspruch 8, wobei die wässrige Lösung zwischen 2 Masse% und 10 Masse%, vorzugsweise zwischen 2 Masse% und 5 Masse%, insbesondere 3.5 Masse% an Natriumchlorid aufweist.

10. Verfahren gemäß Anspruch 8 oder 9, wobei das Reagenz Magnesiumhydrid aufweist und die wässrige Lösung einen pH kleiner als 7, vorzugsweise kleiner oder gleich 5 hat.

11. Vorrichtung (10) zur Produktion von Wasserstoff oder Elektrizitäts, aufweisend:
- wenigstens einen Hydrolysereaktor (25), der fähig und bestimmt dazu ist, ein Material (30) mit einer wässrigen Lösung in Kontakt zu bringen, wobei das Material (30), das mit wenigstens 50 Masse% ein Reagenz aufweist, welches dazu bestimmt ist, sich bei Kontakt mit einer wässrigen Lösung zu hydrolysieren, um Wasserstoff zu erhalten, wobei das Reagenz aufweist, eine erste Zusammensetzung, die ausgewählt ist aus metallischem Magnesium, Magnesiumhydrid und deren Mischungen, und eine zweite Zusammensetzung, die legiert ist mit der ersten Zusammensetzung, wobei die zweite Zusammensetzung ausgewählt ist aus Graphit, Kohlefasern und deren Mischungen, wobei die erste Zusammensetzung, mindestens 75% der Masse des Reagenzes ausmacht und wobei die zweite Zusammensetzung zwischen 1% und 25%, vorzugsweise zwischen 3% und 10%, der Masse des Reagenzes ausmacht, wobei der Hydrolysereaktor (25) fähig und dazu bestimmt ist, das Reagenz mit Hilfe der wässrigen Lösung wenigstens partiell zu hydrolysieren, um gasförmigen Wasserstoff zu erhalten, wobei der Hydrolysereaktor (25) wenigstens einen Ausgang (39) für den gasförmigen Wasserstoff aufweist, und
- optional, wenigstens eine Brennstoffzelle (35) oder wenigstens einen Verbrennungsmotor und einen Stromgenerator, wobei die Brennstoffzelle (35) oder der Verbrennungsmotor wenigstens einen Eingang (41) aufweist, der mit dem Ausgang (39) des Hydrolysereaktors (35) fluidisch verbunden ist, wobei die Brennstoffzelle (35) oder der Verbrennungsmotors und der Stromgenerator konfiguriert sind zum Produzieren von Elektrizität ausgehend vom Wasserstoff, welcher vom Hydrolysereaktor (25) stammt.

## Claims

1. A use of a material (30) for producing hydrogen or electricity, wherein the material (30) comprises at least 50% by mass of a reagent intended to the hydrolyze upon contact with an aqueous solution in order to obtain hydrogen, wherein the reagent comprises:
- a first compound chosen from magnesium metal, magnesium hydride, and mixtures thereof, and
- a second compound alloyed with the first compound, wherein the second compound is chosen from graphite, carbon fibers, and mixtures thereof,
wherein the first compound represents at least 75% by weight of the reagent, and the second compound represents between 1% and 25%, preferably between 3% and 10% by weight of the reagent.

2. The use according to claim 1, wherein the first compound is furthermore alloyed or mixed with one or more metals representing in total between 2% and 10% by weight of the reagent, wherein the carbon compound represents between 2% and 10% by weight of the reagent.

3. The use according to claim 2, wherein the first compound is alloyed with nickel representing between 2% and 10% by weight of the reagent, preferably between 3% and 7% by weight of the reagent, wherein the carbon compound preferably represents between 3% and 7% by weight of the reagent.

4. The use according to any one of claims 1 to 3, wherein the reagent comprises less than 5% by weight, preferably less than 1% by weight, of elements other than magnesium metal, magnesium hydride, graphite, carbon fibers, and transition metals.

5. The use according to any one of claims 1 to 4, wherein the material has the shape of a pellet or a bar and is intended to be placed in a hydrolysis reactor (25).

6. The use according to any one of claims 1 to 5, wherein the reagent comprises a compacted powder of porosity between 20% and 40%.

7. The use according to any one of the claims 1 to 6, implementing a capsule comprising the material (30), and optionally a reservoir of an aqueous solution, preferably comprising at least 1% by weight of sodium chloride.

8. A method for producing hydrogen or electricity comprising the following steps:
- obtaining a material (30) comprising at least 50% by weight of a reagent intended to hydrolyze in contact with an aqueous solution in order to obtain hydrogen, wherein the reagent comprises: a first compound selected from the group consisting of magnesium metal, magnesium hydride, and mixtures thereof; and a second compound alloyed with the first compound, wherein the second compound is selected from graphite, carbon fibers, and mixtures thereof; and wherein the first compound represents at least 75% by weight of the reagent, and the second compound represents between 1% and 25%, preferably between 3% and 10%, by weight of the reagent,
- contacting the material (30) with an aqueous solution, and at least partially hydrolyzing the reagent of the material (30) with the aqueous solution to obtain gaseous hydrogen,
- recovering at least part of the hydrogen obtained, and
- optionally, producing electricity from the recovered hydrogen.

9. Method according to claim 8, wherein the aqueous solution comprises between 2% and 10%, preferably between 2 and 5%, in particular 3.5%, by weight of sodium chloride.

10. Method according to claim 8 or 9, wherein the reagent comprises magnesium hydride and the aqueous solution has a pH than 7, preferably lower than or equal to 5.

11. Device (10) for producing hydrogen or electricity comprising:
- at least one hydrolysis reactor (25) designed to bring a material (30) into contact with an aqueous solution, wherein the material (30) comprises at least 50% by weight of a reagent designed to hydrolyze upon contact with an aqueous solution in order to obtain hydrogen, wherein the reagent comprises: a first compound selected from magnesium metal, magnesium hydride, and mixtures thereof; and a second compound alloyed with the first compound, wherein the second compound is selected from graphite, carbon fibers, and mixtures thereof; wherein the first compound represents at least 75% by weight of the reagent, and the second compound represents between 1% and 25%, preferably between 3% and 10%, by weight of the reagent, wherein the hydrolysis reactor (25) is designed to at least partially hydrolyze the reagent with the aqueous solution in order to obtain gaseous hydrogen, wherein the hydrolysis reactor (25) has at least one outlet (39) for the gaseous hydrogen, and
- optionally, at least one fuel cell (35), or at least one combustion engine with an alternator, wherein the fuel cell (35) or the combustion engine has at least one inlet (41) fluidically connected to the outlet (39) of the hydrolysis reactor (25), wherein the fuel cell (35), or the combustion engine with the alternator, is designed to produce electricity from the hydrogen from the hydrolysis reactor (25).
